**Europäisches Patentamt**

**European Patent Office**

**Office européen des brevets**

(19)

(11) Veröffentlichungsnummer : **0 339 365 B1**

# (12) EUROPÄISCHE PATENTSCHRIFT

(45) Veröffentlichungstag der Patentschrift :
05.07.95 Patentblatt 95/27

(51) Int. Cl.⁶ : **H04N 5/21, H04N 5/44**

(21) Anmeldenummer : **89106470.1**

(22) Anmeldetag : **12.04.89**

(54) **Verfahren und Schaltungsanordnung zur Flimmerreduktion bei einem Fernsehempfänger.**

(30) Priorität : **29.04.88 DE 3814570**

(43) Veröffentlichungstag der Anmeldung :
**02.11.89 Patentblatt 89/44**

(45) Bekanntmachung des Hinweises auf die
Patenterteilung :
**05.07.95 Patentblatt 95/27**

(84) Benannte Vertragsstaaten :
**AT DE FR GB IT**

(56) Entgegenhaltungen :
**EP-A- 0 257 129**
**IEEE TRANSACTIONS ON CONSUMER ELEC-**
**TRONICS, Band CE-31, Heft 4, November**
**1975,Seiten 627-641, IEEE, New York, US; H.**
**SCHRÖDER et al.: "Scanning modes for**
**flicker-free colour TV-reproduction"**
**PATENT ABSTRACTS OF JAPAN, Band 11, Nr.**
**288 (E-542)[2735], 17. September 1987; &**
**JP-A-6286981**

(73) Patentinhaber : **GRUNDIG E.M.V.**
**Elektro-Mechanische Versuchsanstalt Max**
**Grundig GmbH & Co. KG**
**Kurgartenstrasse 37**
**D-90762 Fürth (DE)**

(72) Erfinder : **Schröder, Hartmut, Prof. Dr. Ing.**
**Weisse Taube 30**
**D-4600 Dortmund 50 (DE)**
Erfinder : **Huerkamp, Gregor, Dipl.-Ing.**
**Am Schultenhof 10**
**D-4600 Dortmund 76 (DE)**

(74) Vertreter : **Dreykorn-Lindner, Werner,**
**Dipl.-Ing.**
**GRUNDIG E.M.V.**
**Elektro-Mechanische Versuchsanstalt**
**Max Grundig holländ.Stiftung & Co. KG**
**Lizenzen und Patente**
**D-90748 Fürth (DE)**

## Beschreibung

Die Erfindung betrifft ein Verfahren zur Flimmerreduktion bei einem Fernsehempfänger gemäß dem Oberbegriff des Patentanspruchs 1.

Durch Verwendung von Bildspeichern läßt sich in Fernsehempfängern die Bildqualität verbessern. Der Bildspeicher kann nicht nur zur Unterdrückung von Rausch- oder Cross-Colour-Störungen oder zur Funktionserweiterung (z.B. Bild im Bild) genutzt werden, sondern auch zur Reduktion systembedingter Flimmerstörungen. Zu den Flimmerstörungen zählen Zeilenflimmern, Zeilenwandern, Kantenflackern und Großflächenflackern. Zur Reduzierung des Großflächenflackerns wurde das Zeilensprungverfahren eingeführt, bei dem ein Vollbild in zwei Teilbilder aufgespaltet wird, wobei das eine Teilbild alle ungeraden und das andere Teilbild alle geraden Zeilen enthält. Es sind eine Reihe von verschiedenen Flimmerreduktionsverfahren mit 100-Hz-Teilbildfrequenz unter Beibehaltung des Zeilensprungverfahrens bekannt deren Leistungsfähigkeit im Vergleich zueinander beispielsweise in den Zeitschriften "Fernseh- und Kino-Technik, 40. Jg., Nr. 4/1986, S. 134 - 139" oder "Rundfunktechnische Mitteilungen, Jg. 31 (1987), Heft 2, S. 75 - 82" ausführlich beschrieben sind. Diese Vergleichsbetrachtungen zeigen deutlich, daß für eine wirkungsvolle Beseitigung von Zeilen-Flimmerstörungen eine Kombination der bekannten Flimmerreduktionsverfahren vorzuziehen ist, wobei der Übergang zwischen den bekannten Flimmerreduktionsverfahren unter Einsatz eines Bewegungsdetektors vorgenommen wird.

Mit Hilfe von Interpolationsverfahren kann zwar der Aufwand für den Bewegungsdetektor verringert werden, die gleichzeitige Reduktion von Bewegungsstörungen und Flimmerstörungen erfordert jedoch einen hohen Aufwand bei der Signalverarbeitung. Die Umschaltung zwischen flimmerfreier Halbbildwiedergabefolge und bewegungsrichtiger Halbbildwiedergabefolge ist bereits bei geringen Bewegungsgeschwindigkeiten vorzunehmen.

Der Erfindung liegt die Aufgabe zugrunde, ein Verfahren zur Flimmerreduktion bei einem Fernsehempfänger derart anzugeben, daß der Übergang von zeilenflimmerfreier zu bewegungsrichtiger Teilbildwiedergabefolge erst bei relativ hohen Bewegungsgeschwindigkeiten vorzunehmen ist.

Diese Aufgabe wird durch ein Flimmerreduktionsverfahren mit den Merkmalen des Patentanspruchs 1 gelöst.

Dem erfindungsgemäßen Flimmerreduktionsverfahren liegt die Erkenntnis zugrunde, daß Zeilen-Flimmereffekte vorwiegend durch nach Maßgabe der Ortsfrequenz vertikale Höhenanteile beeinflußt werden. Durch die Vertikalfilterung der im Bildspeicher enthaltenen Signale kann nun für die so erhaltenen Höhen- und Tiefensignale eine Signalverarbeitung derartig durchgeführt werden, daß die Höhensignale zeilenflimmerfrei und die Tiefensignale bewegungsrichtig wiedergegeben werden. Dadurch wird auf überraschend einfache Art und Weise erst bei rasch bewegten Bildbereichen der Übergang auf eine bewegungsrichtige Teilbildwiedergabefolge notwendig.

Bei der Ausführungsform des Flimmerreduktionsverfahrens nach Patentanspruch 2 werden die Höhensignale annähernd mit der Flimmerqualität eines progressiv wiedergegebenen Vollbildes angeboten, d. h., es wird eine zeilenflimmerfreie Bildwiedergabe erreicht. Auch Aliasfehler werden dadurch weitgehend kompensiert. Durch das Tiefensignal werden bewegte Objekte mit ihren wesentlichen Begrenzungen bewegungsrichtig dargestellt. Zur Vermeidung von flatternden Kanten wird zwischen den Halbbildwiedergabefolgen für ruhende und langsam bewegte Bildbereiche bzw. rasch bewegte Bildbereiche weich umgesteuert.

Das Flimmerreduktionsverfahren gemäß Patentanspruch 3 erfordert einen geringen Signalverarbeitungsaufwand, da die vertikale Uminterpolation nur für die Tiefensignale vorzunehmen ist.

Die gewichtete und zeitliche Interpolation der Tiefensignale gemäß Patentanspruch 4 ergibt bei kleineren und mittleren Geschwindigkeiten eine gute Bewegungsdarstellung. Die Verschmierung der Kanten von sich bewegenden Objekten tritt wegen der Höhen-Tiefen-Trennung nur in Horizontalrichtung, d.h. bei vertikalen Kanten und in abgeschwächter Form bei diagonalen Kanten auf. Die auftretende Bewegungsunschärfe kann jedoch durch ein Flimmerreduktionsverfahren gemäß Patentanspruch 5 oder 6 auf einfache Art und Weise räumlich korrigiert werden.

Die Schaltungsanordnung zur Durchführung des Verfahrens gemäß Patentanspruch 7 erfordert einen geringen Schaltungsaufwand, insbesondere bei Realisierung des Bewegungdetektors, und erlaubt die geeignete Festlegung der komplementären Filterflanken.

Bevorzugte Ausgestaltungen der Schaltungsanordnung sind in weiteren Patentansprüchen angegeben.

Die Erfindung wird im folgenden anhand in der Zeichnung dargestellter Ausführungsformen für das erfindungsgemäße Flimmerreduktionsverfahren näher beschrieben und erläutert. Es zeigt:

Fig 1    das Blockschaltbild einer ersten Ausführungsform zur Durchführung des erfindungsgemäßen Verfahrens,

Fig 2    das Blockschaltbild einer Ausführungsform für einen Frequenzbandselektor,

| Fig 3 | schematisch die Signalverarbeitung für eine 100-Hz-Halbbildwiedergabefolge mit Vollbildwiederholung der vertikalen Höhensignale und Halbbildwiederholung der vertikalen Tiefensignale, |
|---|---|
| Fig 4 | das ortsfrequente Spektrum der komplementären, vertikalen Höhen-Tiefensignal-Trennung, |
| Fig 5 | das Blockschaltbild einer Ausführungsform für einen bewegungsadaptiven Frequenzbandselektor, |
| Fig 6 | schematisch die Signalverarbeitung für eine 100-Hz-Halbbildwiedergabefolge mit Vollbildwiederholung der vertikalen Höhensignale und zeitlicher Mittelung der vertikalen Tiefensignale, |
| Fig 7 | das Blockschaltbild einer Ausführungsform für einen gesteuerten Tiefeninterpolator mit Kantenversteilerung, |
| Fig 8 | den Leuchtdichteverlauf bei gewichteter linearer Interpolation, |
| Fig 9 | das Zeitdiagramm für Abtastung und Gewichtung sowie die Übertragungsfunktion zur Erläuterung der Filterwirkung bei linearer Interpolation und |
| Fig 10 | ein zweidimensionales Frequenzspektrum des Leuchtdichtesignals sowie die Übertragungsfunktion und Interpolationsübertragungsfunktion zur Erläuterung der Interpolation bei translatorischer Bewegung. |

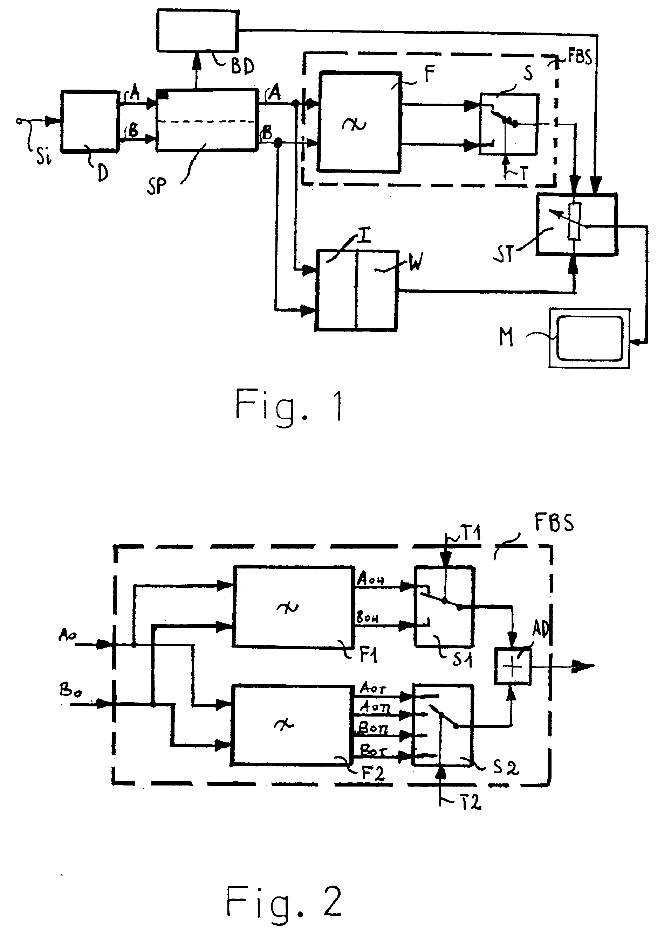

Fig 1 zeigt das Blockschaltbild einer ersten Ausführungsform zur Realisierung des erfindungsgemäßen Verfahrens. Ein Demultiplexer D ist mit einem Bildspeicher SP verbunden, in dem das ankommende Signal Si halbbildweise (Halbbilder A, B) abgespeichert wird. Mit dem Bildspeicher SP sind ein komplementäres, vertikal interpolierendes Filter F, ein Interpolator I und ein Bewegungsdetektor BD verbunden. Mittels des Filters F werden die Halbbilder A,B in Höhen-Tiefensignale z.B. $A_{OH}$, $A_{OT}$ aufgeteilt und über einen Umschalter S einer bewegungsadaptiven Steuerung ST zugeführt. Die Schaltfrequenz des Umschalters S entspricht der doppelten Vertikalfrequenz T. Die bewegungsadaptive Steuerung ST ist weiterhin mit dem Bewegungsdetektor BD, einem Monitor M und einem Bildwiederholschalter W verbunden, an dessen Eingang der Interpolator I angeschlossen ist.

Bei ruhigen und bewegten Bildteilen bis herauf zu etwa 2 bis 3 Bildpunkten Pro Halbbild wird von der bewegungsadaptiven Steuerung ST mit Hilfe des Bewegungsdetektors BD der obere Zweig mit dem Filter F und dem Umschalter S ausgewählt. Bei noch größeren Bewegungsgeschwindigkeiten wird von der bewegungsadaptiven Steuerung ST der untere Zweig mit dem Interpolator I und dem Bildwiederholschalter W angesteuert. Über den oberen Zweig werden die Höhensignale $A_{OH}$, $B_{OH}$ der beiden Halbbilder A, B in einer flimmerfreien 100-Hz-Halbbildwiedergabefolge $A_{OH}$, $B_{OH}$, $A_{OH}$, $B_{OH}$ und die Tiefensignale $A_{OT}$, $B_{OT}$ bzw. interpolierten Tiefensignale $A_{OTi}$, $B_{OTi}$ der beiden Halbbilder A, B in einer bewegungsrichtigen 100-Hz-Halbbildwiedergabefolge $A_{OT}$, $A_{OTi}$, $B_{OTi}$, $B_{OT}$ dem Monitor M zugeführt. Mit dem Buchstaben i ist eine zeitliche Interpolation zwischen den Halbbildrastern angedeutet, welche unter Benutzung geeigneter Filter durchgeführt werden kann. Über den unteren Zweig mit Interpolator I und Bildwiederholschalter W werden bei rasch bewegten Bildbereichen die Halbbilder A, B bzw. durch Interpolation entstehenden Halbbilder $A_i$, $B_i$ am Monitor in einer 100-Hz-Halbbildwiedergabefolge $A_O$, $A_{Oi}$, $B_{Oi}$, $B_O$ wiedergegeben. Durch i soll ebenfalls eine zeitliche Interpolation zwischen den Halbbildrastern, welche unter Benutzung geeigneter Filter durchgeführt werden kann, angedeutet sein.

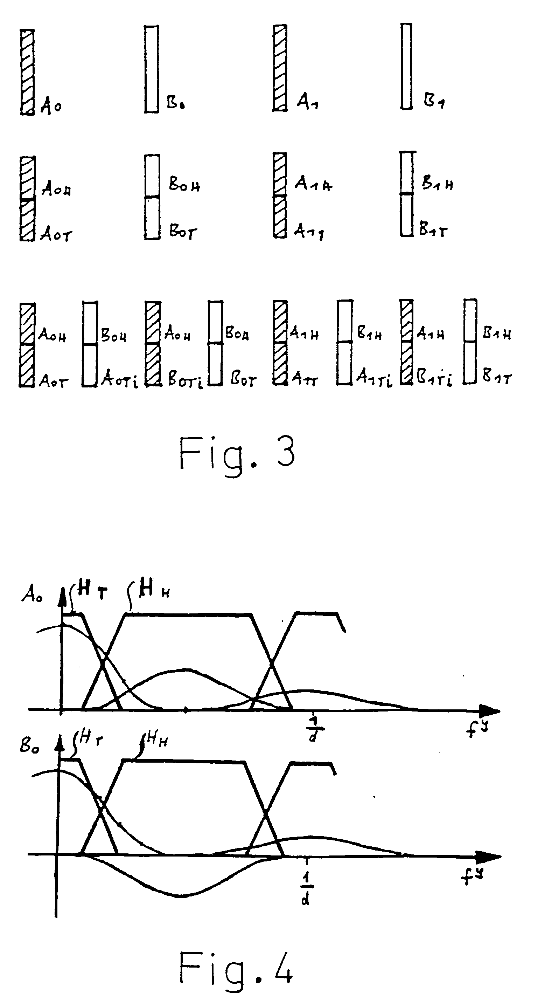

Fig. 2 zeigt im Detail den Aufbau des komplementären, vertikal interpolierenden Filters F und des Umschalters S (Frequenzbandselektor FBS). Das Filter F weist ein vertikales Höhensignalfilter F1 und ein vertikal interpolierendes Tiefensignalfilter F2 auf. Mit dem Höhensignalfilter F1 ist ein erster Schalter S1 und mit dem Tiefensignalfilter F2 ist ein zweiter Schalter S2 verbunden. Die Eingänge des Höhensignalfilters F1 und des Tiefensignalfilters F2 sind mit dem Bildspeicher SP verbunden. Am Ausgang des ersten und zweiten Schalters S1, S2 ist die jeweilige Halbbildwiedergabefolge (100-Hz-Takt T1 bzw. T2) für ruhende und langsam bewegte Bildbereiche abgreifbar, welche über eine Addierschaltung AD dem Monitor M zugeführt wird. Die am Ausgang des ersten und zweiten Schalters S1, S2 auftretenden Halbbildwiedergabefolgen werden im folgenden anhand Fig.3 näher beschrieben und erläutert.

Fig. 3 zeigt schematisch die beim Flimmerreduktionsverfahren auftretenden Signale in den verschiedenen Signalverarbeitungsstufen. Das in der ersten Zeile der Fig. 3 dargestellte ankommende Zeilensprungsignal (Halbbilder $A_O$, $B_O$, $A_1$, $B_1$ usw.) wird durch eine komplementäre Filterung in einen nach Maßgabe der Ortsfrequenz vertikalen Höhen- und Tiefenanteil aufgeteilt (vgl. zweite Zeile der Fig. 3, Höhensignal $A_{OH}$, $B_{OH}$, $A_{1H}$, $B_{1H}$ usw. sowie Tiefensignal $A_{OT}$, $B_{OT}$, $A_{1T}$, $B_{1T}$ usw.).

Für ruhende und langsamer bewegte Bildbereiche werden die Höhensignale $A_{OH}$, $B_{OH}$ der beiden Halbbilder in einer flimmerfreien 100-Hz-Halbbildwiedergabefolge $A_{OH}$, $B_{OH}$, $A_{OH}$, $B_{OH}$ wiedergegeben. Dies sichert auch eine zeilenflimmerfreie Bildwiedergabe, da die für das Zeilenflimmern weitgehend verantwortlichen vertikalen Höhensignale $A_{OH}$, $B_{OH}$ dem Auge - in den Höhen - annähernd in der Flimmerqualität eines progressiv wiedergegebenen Vollbildes angeboten werden. Aliasfehler der im 10-ms-Abstand aufeinanderfolgenden Halbbilder $A_O$, $B_O$ usw. werden weitgehend kompensiert.

Die Tiefensignale $A_{OT}$, $B_{OT}$ bzw. interpolierten Tiefensignale $A_{OTi}$, $B_{OTi}$ der beiden Halbbilder $A_O$,$B_O$ werden in einer bewegungsrichtigen 100-Hz-Halbbildwiedergabefolge $A_{OT}$, $A_{OTi}$, $B_{OTi}$, $B_{OT}$ wiedergegeben. Die zeitliche Interpolation ist auf einfache Art und Weise durchführbar, z.B. durch Zeilenmittelung, da diese nur für das Tiefensignal $A_{OT}$, $B_{OT}$ usw. durchzuführen ist. Diese Ausführungsform der vertikalen Tiefenwiederholung ist für eine Bewegungsdarstellung besonders günstig, da kein zeitlicher Rücksprung erfolgt. Insbesondere werden durch das vertikale Tiefensignal $A_{OT}$, $B_{OT}$ usw. (welches auch alle horizontalen Höhen enthält) bewegte Objekte mit ihren wesentlichen Begrenzungen bewegungsrichtig dargestellt. Die signalmäßig in den vertikalen Höhen $A_{OH}$, $B_{OH}$ usw. dargestellten feinen Details, welche Zeilenflimmern hervorrufen können, werden in der flimmerfreien 100-Hz-Halbbildwiedergabefolge $A_{OH}$, $B_{OH}$, $A_{OH}$, $B_{OH}$ wiedergegeben.

Für die Beurteilung des Flimmerreduktionsverfahrens genügt die spektrale Betrachtung der vertikalen Richtung und der Zeit, da nur in diesen beiden Richtungen diskret abgetastet wird, während in horizontaler Richtung eine kontinuierliche Wiedergabe erfolgt. Durch die zeitlich-sequentielle Abtastung der Zeilen sind Zeitfrequenz $f^t$ und Ortsfrequenz $f^y$ nicht unabhängig von einander, näherungsweise können die Spektren der vertikalen Richtung y und der Zeit t multiplikativ zu zweidimensionalen Spektren zusammengefaßt werden.

In Fig. 4 ist der Frequenzgang für eine Ausführungsform eines vertikalen, komplementären Filters dargestellt. Die ortsfrequenten Spektren der beiden Halbbilder $A_O$ und $B_O$ sind wegen der vertikalen Abtastung periodisch in Richtung der Ortsfrequenzachse $f^y$. Die in den beiden Halbbildern $A_O$ und $B_O$ enthaltenen Aliasfehler kompensieren sich infolge des umgekehrten Vorzeichens.

Durch die Hochpaßfilterung mittels des vertikalen Höhensignalfilters F1 mit dem Frequenzgang $H_H$ entstehen Signale, in denen überwiegend die Aliasfehler enthalten sind. Dadurch kann für die Höhensignale $A_{OH}$, $B_{OH}$ eine Aliaskompensation und Flimmerreduktion vorgenommen werden. Die zur Hochpaßfilterung komplementäre Tiefpaßfilterung mittels des vertikalen Tiefensignalfilters F2 und dem Frequenzgang $H_T$ liefert in den Halbbildern $A_O$ und $B_O$ überwiegend die vorzeichengleichen Basissignale, so daß die Bewegung mit großer Wiedergabetreue darstellbar ist.

Bei größerer Bewegung sind die zu verschiedenen Zeitpunkten aufgenommenen Bildinhalte nicht mehr gleich, so daß die Halbbildspektren in Form und Vorzeichen von einander abweichen. Auch bei idealer Integration würden sich Aliasfehler nicht mehr kompensieren. An feinen horizontalen Details, d. h. bei hohen vertikalen Ortsfrequenzen $f_Y$, würden Artifakte sichtbar werden. Um dies zu vermeiden wird mittels der bewegungsadaptiven Steuerung ST vom oberen auf den unteren Zweig umgesteuert und die Halbbilder $A_O$, $B_O$ bzw. interpolierten Halbbilder $A_{OI}$, $B_{OI}$ in einer bewegungsrichtigen 100-Hz-Halbbildwiedergabefolge $A_O$, $A_{OI}$, $B_{OI}$, $B_O$ wiedergegeben. Durch die weiche Umsteuerung wird das Auftreten von flatternden Kanten vermieden.

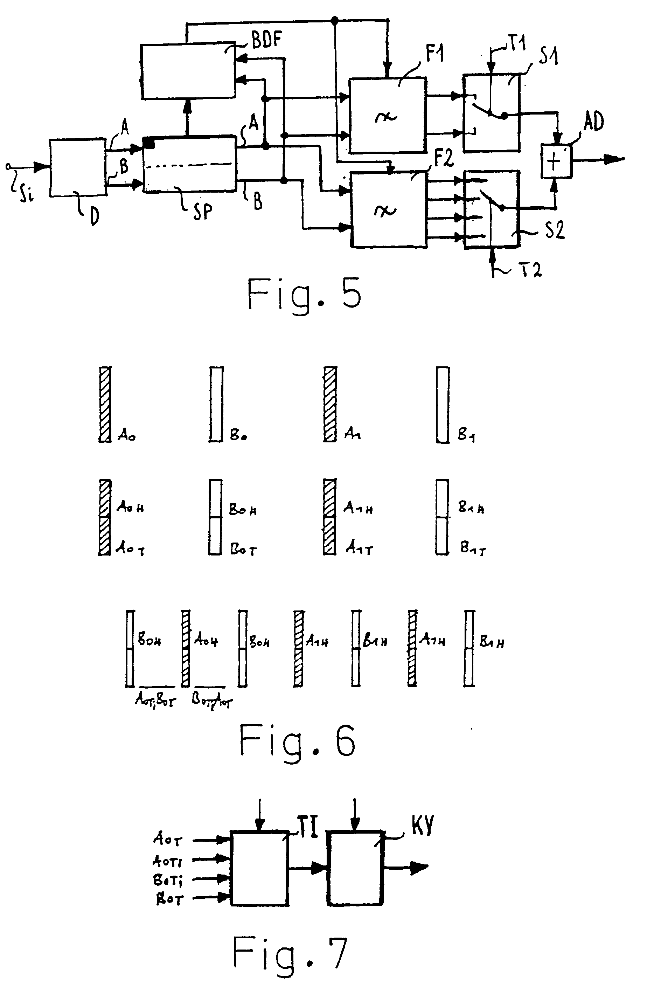

Zur Reduktion der systembedingten Zeilen-Flimmerstörungen ist eine Optimierung der komplementärer Filterflanken von vertikalen Höhensignalfilter F1 und vertikal interpolierenden Tiefensignalfilter F2 erforderlich. Diese Optimierung, im Hinblick auf die zu verarbeitenden Signale, kann vereinfacht werden, wenn eine bewegungsadaptive Steuerung der Filterflanken vorgenommen wird. In Fig. 5 ist eine Ausführungsform für einen bewegungsadaptiven Frequenzbandselektor dargestellt. Das Höhensignalfilter F1 und das Tiefensignalfilter F2 sind mit einem Bewegungsdetektor mit Filtersteuerung BDF verbunden, welcher in Abhängigkeit von der Bewegungsgeschwindigkeit eine Verschiebung der Durchlaßbereiche der beiden Filter F1, F2 derart vornimmt, daß zwischen den Halbbildwiedergabefolgen für Höhen- oder Tiefensignal umgesteuert wird.

Bei ruhenden und sehr schwach bewegten Bildteilen wird die Signalverarbeitung der beiden Halbbilder entsprechend der Signalverarbeitung für das Höhensignal vorgenommen, d.h. die Flanke des vertikalen Höhensignalfilters F1 liegt bei der Grenzfrequenz gleich Null. Mit steigender Bewegungsgeschwindigkeit wird diese Flanke dann kontinuierlich bzw. in Stufen zu höheren Frequnzen verschoben, bis schließlich bei großen Geschwindigkeiten die Signalverarbeitung für die beiden Halbbilder entsprechend der bewegungsrichtigen Signalverarbeitung für das Tiefensignal vorgenommen wird. Auf diese Art und Weise wird eine bewegungsadaptive Steuerung ermöglicht, welche bei jeder Bewegungsgeschwindigkeit eine Optimierung hinsichtlich Bewegungswiedergabe und Flimmerreduktion vornimmt.

In Fig. 6 ist schematisch die Signalverarbeitung einer 100-Hz-Halbbildwiedergabefolge dargestellt, bei der die nach Maßgabe der Ortsfrequenz vertikalen Höhensignale zeilenflimmerfrei wiedergegeben werden und für die Tiefensignale eine Signalverarbeitung mit Gewichtung und zeitlicher Interpolation vorgenommen wird. Bei der Signalverarbeitung wird also eine vertikale Höhen-Tiefensignaltrennung, eine zeitliche, lineare Interpolation der vertikalen Tiefensignale und eine bewegungsadaptive Hinzufügung der vertikalen Höhensignale vorgenommen.

Das ankommende Singal wird zunächst durch eine komplementäre Filterung in ein vertikales Höhen- und Tiefensignal aufgeteilt (vgl. erste und zweite Zeile der Fig. 6). Das vertikale Höhensignal wird für ruhende und schwach bewegte Bildteile in der flimmerfreien 100-Hz-Halbbildwiedergabefolge $A_{OH}$, $B_{OH}$, $A_{OH}$, $B_{OH}$ wiedergegeben. Dadurch wird eine zeilenflimmerfreie Bildwiedergabe erreicht, da die für das Zeilenflimmern weitgehend verantwortlichen vertikalen Höhensignale dem Auge annähernd in der Flimmerqualität eines progressiv geschriebenen Vollbildes angeboten werden. Die Aliasfehler der in 10-ms-Abständen aufeinander folgenden Halbbilder kompensieren sich dabei weitgehend. Für die Gewichtung und zeitliche Interpolation der Tiefensignale sind verschiedene Ausführungsformen denkbar, im Hinblick auf eine gute Bewegungsdarstellung wird vorzugsweise eine Signalverarbeitung entsprechend der nachfolgenden Gleichung vorgenommen:

$$(1) \qquad \overline{A_{OTi}\,B_{OT}} = \frac{3}{4}A_{OTi} + \frac{1}{4}B_{OT}$$

$$\overline{B_{OTi}\,A_{OT}} = \frac{1}{4}A_{OT} + \frac{3}{4}B_{OTi}$$

Die dabei entstehenden Signale sind im Signalverarbeitungsschema der Fig. 6 (in dritter Zeile) dargestellt. Die zeitliche Interpolation für die vertikalen Tiefensignale (d.h. mit den horizontalen Tiefen- und Höhensignalen) sichert bei kleineren und mittleren Geschwindigkeiten eine gute Bewegungsdarstellung. Wie bei allen zeitlich interpolierenden Verfahren tritt ohne weitere Maßnahmen eine Verschmierung der Kanten von sich bewegenden Objekten auf, diese wegen der Höhen-Tiefensignal-Trennung allerdings nur in horizontaler Richtung, d.h. bei vertikalen und - schwächer - bei diagonalen Kanten. Durch eine bewegungsadaptive Signalverarbeitung mit Kantenversteilerung kann die Signalverarbeitung gemäß Gleichung (1) jedoch bis zu Geschwindigkeiten von ca. 1 bis 2 Bildpunkten je Halbbild vorgenommen werden.

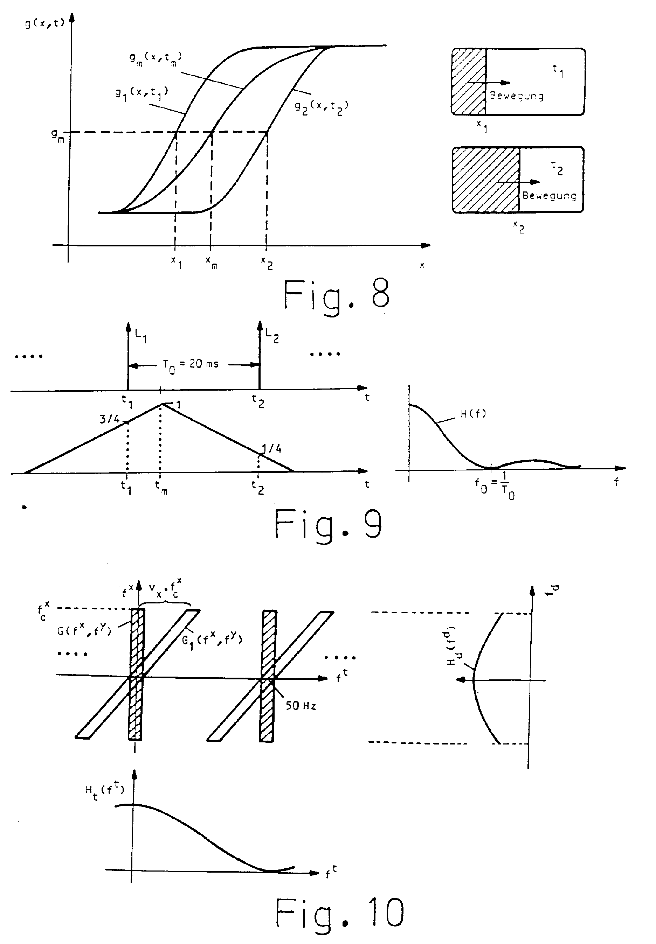

In Fig. 7 ist eine Ausführungsform für eine bewegungsadaptive Signalverarbeitung mit Kantenversteilerung dargestellt. Der Schalter S2 wird durch einen Tiefeninterpolator TI und eine an dessen Ausgang angeschlossene bewegungsadaptive Kantenversteilerungsschaltung KV ersetzt. Der Tiefeninterpolator TI ist mit dem Bewegungsdetektor mit Filtersteuerung BDF verbunden. Die Funktionsweise der räumlichen Korrektur bei zeitlicher Bewegungsverschmierung wird im folgenden anhand der Fig. 8, 9 und 10 näher beschrieben und erläutert.

Fig. 8 zeigt eine sich horizontal fortbewegende vertikale Kante, wobei der Leuchtdichteverlauf $g_1$ $(x,t_1)$ bzw. $g_2$ $(x,t_2)$ zum Zeitpunkt $t_1$ bzw. $t_2$ angegeben ist. Wie Fig. 8 deutlich zeigt, tritt infolge der gewichteten linearen Interpolation eine Kantenverschleifung auf. Die Filterwirkung einer solchen linearen Interpolation läßt sich durch Faltung mit einer in Fig. 9 dargestellten dreieckförmigen Impulsantwort beschreiben, wobei im Frequenzbereich eine Filterwirkung, beschreibbar durch den Frequenzgang $H(f) = T_O\, s_i^2\,(\pi f T_O)$, auftritt.

Für die sich translatorisch in x-Richtung bewegende Kante gilt dann:

$$(2) \qquad g\,(x,y) \;\circ\!\!\!-\!\!\!-\!\!\bullet\; G\,(f^x,\,f^y)$$

Unter Anwendung des Verschiebungssatzes der Fouriertransformation erhält man für die sich bewegende Kante:

$$(3) \qquad g_1\,(x,y,t) = g\,(x - v_x t, y) \;\circ\!\!\!-\!\!\bullet\; G_1\,(f^x,\,f^y)\,(f^t + v_x f^x)$$

Für die Vereinfachung der Betrachtung wird nun die zeilenmäßige Abtastung und der Zeilensprung vernachlässigt und nur die zeitliche Abtastung betrachtet. Für das Spektrum in der $f^x$, $f^t$-Ebene des Signals nach Gleichung (3) ergibt sich die in Fig. 10 angegebene periodische Darstellung. Die translatorisch bewegten Spektren sind längs der Geraden

$$(4) \qquad f^x = -\frac{1}{v_x} f^t$$

geschert. Eine lineare zeitliche Interpolation erzeugt eine Gewichtung mit der Interpolationsübertragungsfunktion $H_t$ $(f^t)$ für das gescherte Spektrum und wirkt räumlich mit der Übertragungsfunktion $H_d$ $(f^d)$ in Richtung des gescherten Spektrums.

Ist die translatorische Bewegung derart, daß das Auge dem Objekt folgen kann, so ist für den Betrachter die Bewegung gleichsam kompensiert. Er nimmt dann mit der Toleranz des Auges für ruhende Objekte den Schärfeverlust besonders an den Kanten wahr. In gewissen Grenzen kann der Schärfeverlust mit Hilfe einer rein räumlichen, linearen oder nichtlinearen Anhebung in $f^x$-Richtung, invers zur Übertragungsfunktion $H_d$ $(f^d)$ kompensiert werden.

Die Kantenanhebung ist adaptiv in Bewegungsrichtung und proportional zum Geschwindigkeitsbetrag des Geschwindigkeitsvektors vorzunehmen. Durch die Beschränkung der bewegungsabhängigen Versteilerung auf vertikale Tiefensignale und das spätere Hinzufügen der vertikalen Höhensignale ist eine Bewegungsvektorschätzung mit geringem Aufwand möglich, insbesondere führt eine eindimensionale, horizontale Frequenzganganhebung bzw. nichtlineare Kantenversteilerung in derselben Richtung zu zufriedenstellenden Ergebnissen. Weitere Ausführungsformen hierfür sind durch eine dem Geschwindigkeitsbetrag näherungsweise proportionale Gewichtung der Frequenzanhebung bzw. eine dem Geschwindigkeitsbetrag näherungsweise proportionale, gewichtete Kantendetail-Signaladdition gegeben.

## Patentansprüche

1.  Flimmerreduktionsverfahren für einen Fernsehempfänger, bei dem das empfangene Fernsehsignal halbbildweise in einem Bildspeicher (SP) des Fernsehempfängers zwischengespeichert, die Halbbilder einer Signalverarbeitung unterzogen und mit doppelter Vertikalfrequenz nach dem Zeilensprungverfahren wiedergegeben werden, **dadurch gekennzeichnet,** daß durch eine Vertikalfilterung der im Bildspeicher (SP) enthaltenen Signale, diese nach Maßgabe der Ortsfrequenz in ein vertikales Höhen- und Tiefensignal ($A_{OH}$, $B_{OH}$ und $A_{OT}$, $B_{OT}$) aufgeteilt werden und daß die so erhaltenen Höhen- und Tiefensignale ($A_{OH}$, $B_{OH}$ und $A_{OT}$, $B_{OT}$) einer Signalverarbeitung mit unterschiedlichen Wiedergabefolgen von Höhen- und Tiefensignale der Halbbilder unterzogen werden.

2. Flimmerreduktionsverfahren nach Anspruch 1, **dadurch gekennzeichnet,** daß - gesteuert durch einen Bewegungsdetektor (BD) - bei ruhenden und langsam bewegten Bildbereichen einerseits die Höhensignale ($A_{OH}$, $B_{OH}$) der beiden Halbbilder in einer flimmerfreien 100 Hz-Halbbildwiedergabefolge ($A_{OH}$, $B_{OH}$, $A_{OH}$, $B_{OH}$) und andererseits die Tiefensignale ($A_{OT}$, $B_{OT}$) mit daraus interpolierten Tiefensignale ($A_{OTi}$, $B_{OTi}$) der beiden Halbbilder in einer bewegungsrichtigen 100 Hz-Halbbildwiedergabefolge ($A_{OT}$, $A_{OTi}$, $B_{OTi}$, $B_{OT}$) wiedergegeben werden und daß bei rasch bewegten Bildbereichen die beiden Halbbilder ($A_O$, $B_O$) und daraus interpolierte Halbbilder ($A_{Oi}$, $B_{Oi}$) in einer bewegungsrichtigen 100 Hz-Halbbildwiedergabefolge ($A_O$, $A_{Oi}$, $B_{Oi}$, $B_{Oi}$) wiedergegeben werden.

3. Flimmerreduktionsverfahren nach Anspruch 1, **dadurch gekennzeichnet,** daß durch Zeilenmittelung der Tiefensignale ($A_{OT}$, $B_{OT}$) eine vertikale Interpolation vorgenommen wird.

4. Flimmerreduktionsverfahren nach Anspruch 1, **dadurch gekennzeichnet,** daß bei der Signalverarbeitung die Tiefensignale ($A_{OT}$, $B_{OT}$) gewichtet und zeitlich interpoliert werden.

5. Flimmerreduktionsverfahren nach Anspruch 4, **dadurch gekennzeichnet,** daß eine nichtlineare Kantenversteilerung der Tiefensignale ($A_{OT}$, $B_{OT}$) adaptiv in Richtung des Bewegungsvektors und proportional zu dessen Geschwindigkeitsbetrag vorgenommen wird.

6. Flimmerreduktionsverfahren nach Anspruch 5, **dadurch gekennzeichnet,** daß zur Reduzierung der Bewegungsunschärfe eine nichtlineare Kantenversteilerung der Tiefensignale ($A_{OT}$, $B_{OT}$) in Richtung der horizontalen Ortskoordinate vorgenommen wird.

7. Schaltungsanordnung zur Durchführung des Verfahrens nach einem der vorhergehenden Ansprüche, **dadurch gekennzeichnet,** daß mittels eines im Fernsehempfänger angeordneten Demultiplexers (D) und mit einem damit verbundenen Bildspeicher (SP) das ankommende Signal halbbildweise zwischengespeichert wird, daß zur Aufteilung in Höhen- und Tiefensignal ($A_{OH}$, $B_{OH}$ und $A_{OT}$, $B_{OT}$) mit dem Bildspeicher (SP) ein vertikal interpolierendes Filter (F) verbunden ist, daß das Filter (F) mit einem Umschalter (S) verbunden ist, welcher das Höhen- und das Tiefensignal ($A_{OH}$, $B_{OH}$ und $A_{OT}$, $B_{OT}$, $A_{OTi}$, $B_{OTi}$) in unterschiedlichen Halbbildwiedergabefolgen einer bewegungsadaptiven Steuerung (ST) zuführt und daß die bewegungsadaptive Steuerung (ST) einerseits mit einem an den Bildspeicher (SP) angeschlossenen Bewegungsdetektor (BD) verbunden ist und anderseits über einen Bildwiederholschalter (W) und einen Interpolar (I) mit dem Bildspeicher (SP) in Verbindung steht.

8. Schaltungsanordnung nach Anspruch 7 in Kombination mit Anspruch 2, **dadurch gekennzeichnet,** daß das vertikal interpolierende Filter (F) ein vertikales Höhensignalfilter (F1) und ein vertikal interpolierendes Tiefensignalfilter (F2) aufweist und daß mit dem Höhensignalfilter (F1) ein erster Schalter (S1) und mit dem Tiefensignalfilter (F2) ein zweiter Schalter (S2) verbunden ist, wobei am Ausgang des ersten und zweiten Schalters (S1 und S2) die jeweilige Halbbildwiedergabefolgen für ruhende und langsam bewegte Bildbereiche abgreifbar sind.

9. Schaltungsanordnung nach Anspruch 8, **dadurch gekennzeichnet,** daß das Höhensignalfilter (F1) und das Tiefensignalfilter (F2) mit einem Bewegungsdetektor mit Filtersteuerung (BDF) verbunden sind, welcher in Abhängigkeit von der Bewegungsgeschwindigkeit eine Verschiebung der Durchlaßbereiche der beiden Filter (F1, F2) derart vornimmt, daß zwischen den Halbildwiedergabefolgen, bestehend aus Höhen- oder Tiefensignale, umgesteuert wird.

10. Schaltungsanordnung nach Anspruch 8, **dadurch gekennzeichnet,** daß mit dem Tiefensignalfilter (F2) ein Tiefeninterpolator (TI) verbunden ist, an dessen Ausgang eine bewegungsadaptive Kantenversteilerungsschaltung (KV) angeschlossen ist.

**Claims**

1. Flicker-reduction method for a television receiver, in which the received television signal is temporarily stored in fields in a frame store (SP) of the television receiver, the fields being subjected to a signal processing and being reproduced at twice the field frequency by the interlaced scanning method, characterized in that, as a result of a vertical filtering of the signals contained in the frame store (SP), they are divided up into a vertical high-frequencies signal and low-frequencies signal ($A_{OH}$, $B_{OH}$ and $A_{OT}$, $B_{OT}$) as a function of the spatial frequency and in that the high-frequencies and low-frequencies signals ($A_{OH}$, $B_{OH}$ and $A_{OT}$, $B_{OT}$) thus obtained are subjected to a signal processing with different reproduction sequences of high-frequencies and low-frequencies signals of the fields.

2. Flicker-reduction method according to Claim 1, characterized in that, for stationary and slowly moving picture areas, the high-frequencies signals ($A_{OH}$, $B_{OH}$) of the two fields, on the one hand, are reproduced in a flicker-free 100 Hz field reproduction sequence ($A_{OH}$, $B_{OH}$, $A_{OH}$, $B_{OH}$) and, on the other hand, the low-frequencies signals ($A_{OT}$, $B_{OT}$) with low-frequencies signals ($A_{OTi}$, $B_{OTi}$) of the two fields interpolated therefrom are reproduced in a motion-adapted 100 Hz field reproduction sequence ($A_{OT}$, $A_{OTi}$, $B_{OTi}$, $B_{OT}$) under the control of a motion detector (BD), and in that, in the case of rapidly moving picture areas, the two fields ($A_O$, $B_O$) and the fields ($A_{Oi}$, $B_{Oi}$) interpolated therefrom are reproduced in a motion-adapted 100 Hz field reproduction sequence ($A_O$, $A_{Oi}$, $B_{Oi}$, $B_O$).

3. Flicker-reduction method according to Claim 1, characterized in that a vertical interpolation is carried out by line averaging of the low-frequencies signals ($A_{OT}$, $B_{OT}$).

4. Flicker-reduction method according to Claim 1, characterized in that the low-frequencies signals ($A_{OT}$, $B_{OT}$) are weighted and time-interpolated during the signal processing.

5. Flicker-reduction method according to Claim 4, characterized in that a nonlinear edge slope increase of the low-frequencies signals ($A_{OT}$, $B_{OT}$) is carried out adaptively in the direction of the motion vector and proportionally to its velocity modulus.

6. Flicker-reduction method according to Claim 5, characterized in that, to reduce the motion-unsharpness, a nonlinear edge slope increase of the low-frequencies signals ($A_{OT}$, $B_{OT}$) is carried out in the direction of the horizontal positional coordinate.

7. Circuit arrangement for carrying out the method according to one of the preceding claims, characterized in that the incoming signal is temporarily stored in fields by means of a demultiplexer (D) fitted in the television receiver and a frame store (SP) connected thereto, in that, for the purpose of division into high-frequencies signal and low-frequencies signal ($A_{OH}$, $B_{OH}$ and $A_{OT}$, $B_{OT}$), a vertically interpolating filter (F) is connected to the frame store (SP), in that the filter (F) is connected to a changeover switch (S) which feeds the high-frequencies signal and the low-frequencies signal ($A_{OH}$, $B_{OH}$ and $A_{OT}$, $B_{OT}$, $A_{OTi}$, $B_{OTi}$) to a motion-adaptive controller (ST) in different field reproduction sequences, and in that the motion-adaptive controller (ST) is connected, on the one hand, to a motion detector (BD) connected to the frame store (SP) and is connected, on the other hand, to the frame store (SP) via a frame repetition switch (W) and an interpolator (I).

8. Circuit arrangement according to Claim 7 in combination with Claim 2, characterized in that the vertically interpolating filter (F) comprises a vertical high-frequencies signal filter (F1) and a vertically interpolating low-frequencies signal filter (F2) and in that a first switch (S1) is connected to the high-frequencies signal filter (F1) and a second switch (S2) is connected to the low-frequencies signal filter (F2), the respective field reproduction sequences for stationary and slowly moving picture areas being capable of being tapped off at the output of the first and second switch (S1 and S2).

9. Circuit arrangement according to Claim 8, characterized in that the high-frequencies signal filter (F1) and the low-frequencies signal filter (F2) are connected to a motion detector with filter control (BDF), which detector carries out a displacement of the pass ranges of the two filters (F1, F2) as a function of the movement velocity in such a way that switching is carried out between the field reproduction sequences comprising high-frequencies or low-frequencies signals.

10. Circuit arrangement according to Claim 8, characterized in that a low-frequencies interpolator (TI) is connected to the low-frequencies signal filter (F2) and a motion-adaptive edge slope increase circuit (KV) is connected to its output.

**Revendications**

1. Procédé de réduction du papillottement pour un récepteur de télévision, dans lequel le signal de télévision reçu est mémorisé temporairement, trame par trame, dans une mémoire d'images (SP) du récepteur de télévision, les trames sont soumises à un traitement des signaux et sont reproduites avec une fréquence verticale double, selon le procédé à entrelacement de lignes, caractérisé en ce que grâce à un filtrage vertical des signaux contenus dans la mémoire d'images (SP), ces signaux sont divisés, en fonction de la fréquence totale, en un signal haute fréquence vertical et un signal basse fréquence vertical ($A_{OH}$, $B_{OH}$ et $A_{OT}$, $B_{OT}$) et que les signaux haute fréquence et basse fréquence ainsi obtenus ($A_{OH}$, $B_{OH}$ et $A_{OT}$, $B_{OT}$) sont soumis à un traitement avec des fréquences différentes de répétition des signaux haute fréquence et des signaux basse fréquence des trames.

2. Procédé de réduction du papillottement selon la revendication 1, caractérisé en ce que, d'une manière commandée par un détecteur de déplacement (BD) - dans le cas de zones d'image fixes et de zones d'image à déplacement lent, d'une part les signaux haute fréquence ($A_{OH}$, $B_{OH}$) des deux trames sont reproduits selon une séquence de répétition de trames à 100 Hz sans papillottement ($A_{OH}$, $B_{OH}$, $A_{OH}$, $B_{OH}$) et d'autre part les signaux basse fréquence ($A_{OT}$, $B_{OT}$) sont reproduits ainsi que les signaux basse fréquence ($A_{OTi}$, $B_{OTi}$), interpolés à partir des précédents, des deux trames selon une séquence de répétition de trames à 100 Hz correcte du point de vue du déplacement ($A_{OT}$, $A_{OTi}$, $B_{OTi}$, $B_{OT}$) et que, dans le cas de zones de l'image à déplacement rapide, les deux trames ($A_O$, $B_O$) et les trames ($A_{Oi}$, $B_{Oi}$) interpolées à partir des précédentes sont reproduites selon une séquence de reproduction de trames à 100 Hz correcte du point de vue du déplacement ($A_O$, $A_{Oi}$, $B_{Oi}$, $B_O$).

3. Procédé de réduction du papillottement selon la revendication 1, caractérisé en ce qu'on réalise une interpolation verticale au moyen de la formation de la moyenne des lignes des signaux basse fréquence ($A_{OT}$, $B_{OT}$).

4. Procédé de réduction du papillottement selon la revendication 1, caractérisé en ce que lors du traitement des signaux, les signaux basse fréquence ($A_{OT}$, $B_{OT}$) sont pondérés et interpolés dans le temps.

5. Procédé de réduction du papillottement selon la revendication 4, caractérisé en ce qu'on réalise un accroissement non linéaire de la pente des flancs des signaux basse fréquence ($A_{OT}$, $B_{OT}$) d'une manière adaptative dans le sens du vecteur de déplacement et proportionnellement à la valeur absolue de la vitesse de ce vecteur.

6. Procédé de réduction du papillottement selon la revendication 5, caractérisé en ce que pour réduire le flou de bougé, on exécute une augmentation non linéaire de la pente des flancs des signaux basse fréquence ($A_{OT}$, $B_{OT}$) dans la direction de la coordonnée horizontale de lieu.

7. Montage pour la mise en oeuvre du procédé selon l'une quelconque des revendications précédentes, caractérisé en ce qu'à l'aide d'un démultiplexeur (D) disposé dans le récepteur de télévision et d'une mémoire d'images (SP) reliée à ce démultiplexeur, le signal arrivant est mémorisé temporairement trame par trame, que pour la subdivision en signal haute fréquence et signal basse fréquence ($A_{OH}$, $B_{OH}$ et $A_{OT}$, $B_{OT}$), à la mémoire d'images (SP) est relié un filtre (F) réalisant une interpolation verticale, que le filtre (F) est relié à un commutateur (S), qui envoie le signal haute fréquence et le signal basse fréquence ($A_{OH}$, $B_{OH}$ et $A_{OT}$, $B_{OT}$, $A_{OTi}$ $B_{OTi}$) avec différentes séquences de reproduction de trames, à une unité de commande (ST) adaptative du point de vue du déplacement et que l'unité de commande (ST) adaptative du point de vue du déplacement est reliée d'une part à un détecteur de déplacement (BD) raccordé à la mémoire d'images (SP) et d'autre part, par l'intermédiaire d'un commutateur (W) de répétition d'images et d'un interpolateur (I), à la mémoire d'images (SP).

8. Montage suivant la revendication 7 en combinaison avec la revendication 2, caractérisé en ce que le filtre (F), qui réalise l'interpolation verticale, comporte un filtre vertical (F1) pour les signaux de fréquence et un filtre (F2), réalisant une interpolation verticale, pour les signaux basse fréquence, et qu'un premier commutateur (S1) est relié au filtre (F1) traitant les signaux de fréquence et qu'un second commutateur (S2) est relié au filtre (F2) traitant les signaux basse fréquence, les séquences respectives de répétition des trames pouvant être prélevées à la sortie des premier et second commutateurs (S1, S2), pour des zones d'image fixes et des zones d'image à déplacement lent.

9. Montage suivant la revendication 8, caractérisé en ce que le filtre (F1) pour les signaux haute fréquence et le filtre (F2) pour les signaux basse fréquence sont reliés à un détecteur de déplacement comportant une unité de commande des filtres (BDF), qui, en fonction de la vitesse de déplacement, exécute un décalage des bandes passantes des deux filtres (F1,F2) de telle sorte qu'il se produit une commutation entre les séquences de reproduction de trames, constituées par les signaux haute fréquence ou les signaux basse fréquence.

10. Montage suivant la revendication 8, caractérisé en ce qu'au filtre (F2) pour les signaux basse fréquence est raccordé un interpolateur de basse fréquence (TI), à la sortie duquel est raccordé un circuit (KV) de redressement des bords, qui est adaptatif en fonction du déplacement.

Fig. 1

Fig. 2

$A_0$  $B_0$  $A_1$  $B_1$

$A_{0H}$  $B_{0H}$  $A_{1H}$  $B_{1H}$
$A_{0T}$  $B_{0T}$  $A_{1T}$  $B_{1T}$

$A_{0H}$ $B_{0H}$ $A_{0H}$ $B_{0H}$ $A_{1H}$ $B_{1H}$ $A_{1H}$ $B_{1H}$
$A_{0T}$ $A_{0Ti}$ $B_{0Ti}$ $B_{0T}$ $A_{1T}$ $A_{1Ti}$ $B_{1Ti}$ $B_{1T}$

## Fig. 3

$A_0$ $H_T$ $H_H$

$\frac{1}{d}$  $f_y$

$B_0$ $H_T$ $H_H$

$\frac{1}{d}$  $f_y$

## Fig. 4

Fig. 5

Fig. 6

Fig. 7

Fig. 8

Fig. 9

Fig. 10